## Europäisches Patentamt
## European Patent Office
## Office européen des brevets

(19)

(11) Numéro de publication: **0 190 956**
**B1**

(12)

# FASCICULE DE BREVET EUROPÉEN

(45) Date de publication du fascicule du brevet:
**21.09.88**

(51) Int. Cl.⁴: **F 16 D 55/224**

(21) Numéro de dépôt: **86400079.9**

(22) Date de dépôt: **15.01.86**

(54) Frein à disque à étrier coulissant.

(30) Priorité: **23.01.85 FR 8500923**

(43) Date de publication de la demande:
**13.08.86 Bulletin 86/33**

(45) Mention de la délivrance du brevet:
**21.09.88 Bulletin 88/38**

(84) Etats contractants désignés:
**DE GB IT**

(56) Documents cité:
**DE-A-1 927 459**
**FR-A-1 548 356**
**FR-A-2 295 300**
**GB-A-1 577 421**
**US-A-3 480 116**

(73) Titulaire: **BENDIX France, 126, rue de Stalingrad,
F-93700 Drancy (FR)**

(72) Inventeur: **Mery, Jean- Claude, 61 rue Emile Zola,
F-93320 Pavillons sous Bois (FR)**

(74) Mandataire: **Brullé, Jean, Division Technique
Service Brevets Bendix Europe 126, rue de
Stalingrad, F-93700 Drancy (FR)**

EP 0 190 956 B1

## Description

L'invention se rapporte à un frein à disque à étrier coulissant notamment pour véhicule automobile. L'invention concerne plus particulièrement un frein à disque du type à étrier coulissant comportant deux axes de guidage et de maintien de deux éléments de friction susceptibles d'être actionnés par un moteur de frein, le frein à disque comportant également un ressort anti-bruit constitué d'une lame métallique en forme générale d'une croix comportant deux bras d'appui formés de part et d'autre d'une portion centrale axiale lesdits bras prenant appui radialement sur lesdits axes, la portion centrale coopérant en appui avec des portions périphériques extérieures des éléments de friction.

Un frein de ce type est décrit dans le brevet anglais GB-1 577 421. La solution proposée, présente néanmoins l'inconvénient majeur que le ressort anti-bruit peut être monté à l'envers c'est à dire que la portion d'accrochage se situerait non pas sur le patin extérieur mais sur le patin intérieur. Par conséquent, le ressort devrait se déplacer avec le patin intérieur à chaque application du freinage engendrant un frottement parasite entre le ressort et les axes de guidage d'une part et d'autre part l'extrémité libre du corps principal du ressort serait situé du côté opposé au moteur de frein, c'est à dire vers la roue du véhicule, et donc lors du déplacement de l'élément de friction intérieur l'extrémité libre du ressort se déplace par rapport à l'étrier et peut sortir de l'encombrement autorisé par la roue du véhicule, entraînant le frottement du ressort sur la roue, et pouvant amener la destruction du ressort. Ce déplacement et par conséquent le dépassement du ressort par rapport à l'étrier est d'autant plus important que l'epaisseur à user sur les éléments de friction est importante.

Le ressort décrit dans le brevet anglais référencé ci-dessus présente néanmoins encore un inconvénient. La structure décrite assure un effort sensiblement constant sur les éléments de friction grâce entre autre à la flexibilité des bras prenant appui sur les axes de guidage. Ceci impose un écartement substantiel des axes par rapport à la partie centrale du ressort de manière à permettre aux bras d'être suffisament flexibles pour subir les déformations élastiques nécessaires. Si les axes sont situés à proximité immédiate de la portion centrale du eessort, les bras ne disposant plus de l'élasticité voulue, l'effort appliqué sur les éléments de friction n'est pratiquemant plus contrôlable et peut être trop élevé soit pratiquement nul en particulier en fonction de la position de l'élément de friction intérieur par rapport au ressort de patin.

L'invention a pour but de proposer un frein à disque du type décrit ci-dessus dans lequel tous ces inconvénients son éliminés tout en présentant les avantages de celui-ci.

La présente invention a pour autre objet de limiter les variations d'effort du ressort appliqué sur les éléments de friction.

Dans ce but l'invention propose un frein à disque à étrier coulissant comportant deux axes de guidage et de maintien de deux éléments de friction susceptibles d'être actionnés par un moteur de frein et comportant un ressort anti-bruit constitué d'une lame métallique en forme générale d'une croix comportant deux bras d'appui formés de part et d'autre d'une portion centrale axiale, lesdits bras prenant appui radialement sur lesdits axes, ladite portion centrale coopérant en appui avec des portions périphériques extérieures des éléments de friction caractérisées en ce qu'une des extrémités de ladite portion centrale comporte un prolongement ayant une forme générale en Z, l'extrêmité libre dudit prolongement s'etendant généralement parallèlement à ladite portion centrale et étant reçue dans une ouverture formée en vis à vis dans ledit étrier, avec un jeu radial prédéterminé, et en ce que trois plages de positions relatives dudit élément de friction par rapport à ladite portion centrale sont prédéterminées, une première plage correspondant aux éléments de friction neufs ou au début de leur usure pour laquelle ledit prolongement coopère radialement extérieurement avec une bordure extérieure de l'orifice, une deuxième plage correspondant à une usure moyenne des éléments de friction pour laquelle le prolongement est libre radialement dans ledit orifice et une troisième plage correspondant à la fin d'usure des éléments de friction pour laquelle ledit prolongement coopère radialement intérieurement avec une bordure intérieure de l'orifice.

On comprend que grâce à une telle structure, le montage du ressort ne peut se faite que lorsque le prolongement est reçu dans l'ouverture prévue et par conséquent un montage inversé est impossible.

De plus avec un tel agencement, la coopération radiale du prolongement avec les bords de l'orifice permet d'accroître ou de diminuer l'effort du ressort sur les éléments de friction, selon l'appui choisi dans l'orifice, à savoir appui extérieur ou appui intérieur.

D'autres caractéristiques et avantages du frein à disque objet de la présente invention, ressortiront de la description suivante d'un mode de réalisation, donné à titre illustratif mais nullement limitatif, faite en relation avec les dessins annexés, dans lesquels:

La Figure 1 est une vue de dessus, partiellement en coupe, d'un frein à disque à étrier coulissant réalisé conformément à l'invention;

La Figure 2 est une vue en coupe axiale suivant le plan de coupe II-II de la Figure 1;

La Figure 3 est une vue partielle selon la flèche A de la Figure 2;

La Figure 4 est une vue de dessus agrandie d'un ressort de patin du frein de la Figure 1;

La Figure 5 est une vue de côté du ressort de la Figure 4 à l'état libre;

La Figure 6 est une vue de face du ressort de la Figure 4; et

La Figure 7 représente une variante partielle à la Figure 5.

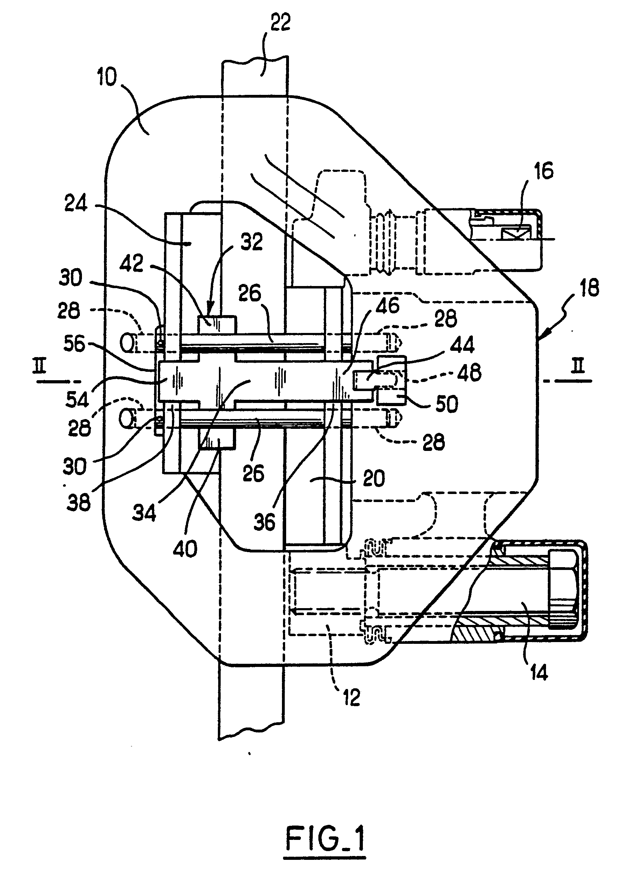

Le frein à disque représenté sur les Figures 1, 2 et 3 comprend un étrier coulissant désigné dans son ensemble par la référence 10 monté sur un organe ou support fixe 12 susceptible d'être fixé à une partie fixe du véhicule (non représentée). L'étrier 10 est monté coulissant sur le support fixe 12 au moyen de 2 colonnettes 14 et 16 vissées dans le support fixe 12 et passant à travers des alésages formés dans l'étrier 10. Un moteur de frein désigné dans son ensemble par la référence 18 est susceptible d'agir directement sur un premier élément de friction 20 de manière à solliciter celui-ci en appui sur un disque à freiner 22 et par réaction au-travers de l'étrier coulissant 10 d'appliquer un deuxième élément de friction 24 sur le disque 22. D'une façon conventionnelle, l'élément de friction 20 est ancré dans le support fixe 12 tandis que l'élément de friction 24 est ancré directement sur l'étrier coulissant 10. Les deux éléments de friction 20 et 24 sont guidés et maintenus par deux axes de guidage et de maintien 26 montés dans des orifices 28 formés dans l'étrier 10, les deux axes étant immobilisés par rapport à l'étrier 10 au moyen de goupilles ou analogue 30 placées entre l'étrier et l'élément de friction 24 par exemple. Un ressort anti-bruit désigné dans son ensemble par la référence 32 comporte une portion centrale 34 qui prend appui sur les portions périphériques 36 et 38 respectivement des éléments de friction 20 et 24 et comporte deux bras d'appui 40 et 42 formés de part et d'autre de la portion centrale 34 et prenant appui radialement sur les deux axes 26.

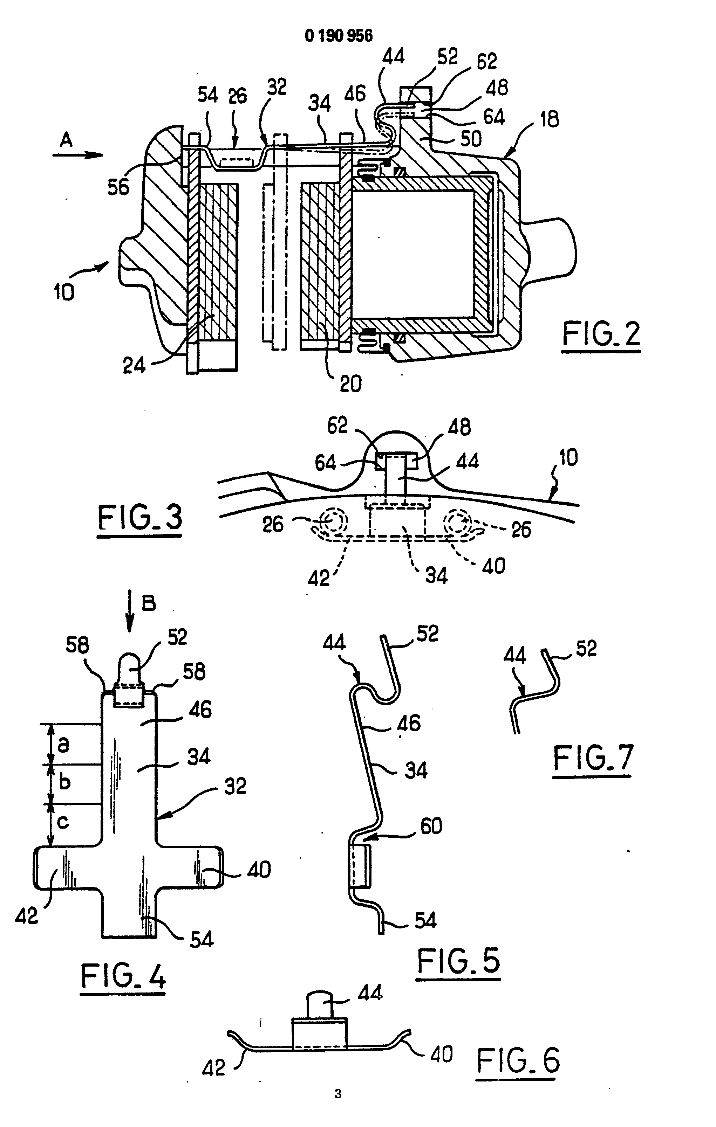

Conformément à l'invention, la portion centrale 34 du ressort 32 comporte un prolongement 44 formé sur une extrémité 46 de la portion centrale 34, ce prolongement 44 pénétrant dans un orifice 48 formé dans un bossage 50 solidaire de l'étrier 10. Plus précisément, l'extrémité libre 52 du prolongement 44 pénètre dans l'orifice 48. En se reportant aux Figures 2 et 3, on voit que l'extrémité libre 52 s'étend généralement parallèlement à la portion centrale 34 et que cette extrémité 52 est montée avec jeu radial dans l'orifice 48, c'est à dire que l'orifice 48, dans le sens radial, a une dimension supérieure à l'épaisseur de l'extrémité libre 52, définissant ainsi un jeu radial entre cette extrémité 52 et l'orifice 48. L'autre extrémité 54 de la portion centrale 34 dépasse axialement, en éloignement du moteur de frein 18, l'élément de friction 24 et se trouve en vis à vis d'une surface frontale 56 formée sur l'étrier 10.

En se reportant aux Figures 4, 5 et 6, qui représentent le ressort 32 avant son montage sur l'étrier 10, on voit que le prolongement 44 a la forme générale d'un Z se terminant par l'extrémité libre 52 d'une largeur inférieure à la portion centrale 34. Ce changement de largeur forme un épaulement double 58 placé à proximité immédiate du bossage 50 comme représenté sur la Figure 2, assurant ainsi avec l'extrémité 54 le positionnement axial du ressort 32 par rapport à l'étrier 10. Par axial il est entendu une direction parallèle à l'axe de rotation du disque 22 ou bien parallèle à l'axe du moteur de frein 18.

En se reportant aux Figures 5 et 6 on voit que dans le mode de réalisation représenté, les bras 40 et 42 sont placés de part et d'autre de la portion centrale 34 qui à cet endroit présente une forme de gouttière 60 pour des raisons d'encombrement du frein, cette gouttière 60 n'étant pas nécessaire à l'invention. On remarquera que les bras 40 et 42 sont formés à proximité de l'extrémité 54 et sont sensiblement rigides du fait de leur faible longueur. En se reportant à la Figure 5 on voit que à partir de la gouttière 60, la portion centrale 34 forme un angle par rapport à l'extrémité 54 et aux bras 40 et 42, et qu'il en est de même de l'extrémité libre 52 qui reste sensiblement parallèle à la portion centrale 34. La valeur de l'angle dépend de la rigidité du matériau utilisé et des efforts que l'on veut appliquer sur les éléments de friction.

La Figure 7 représente une variante du prolongement 44 qui donne moins de flexibilité à la portion en Z du prolongement 44 que ne le fait la forme représentée sur la Figure 5.

En se reportant aux Figures 3 et 6 on voit que les extrémités des bras 40 et 42 sont cintrées radialement de manière à immobiliser le ressort 32 par rapport aux axes 26 dans le sens transversal.

En se reportant à La Figure 2, on voit que lorsque le ressort est monté sur le frein, les éléments de friction étant neufs, la portion centrale 34 est sensiblement rectiligne et parallèle à l'axe du disque 22. Dans ces conditions, on voit que l'extrémité libre 52 est en appui sur une bordure extérieure 62 de l'orifice 48. On a représenté en pointillés sur cette Figure 2, l'élément de friction 20 lorsque les deux éléments de friction 20 et 24 sont proches de leur limite maximale d'usure. Dans ces conditions, la portion centrale 34 et plus précisément son extrémité 46 se rapproche de l'axe du disque 22, le prolongement 44 et plus précisément l'extrémité libre 52 de celui-ci venant en appui intérieurement avec une bordure intérieure 64 de l'orifice 48, pour cette position, le ressort 32 a été représenté partiellement en pointillés.

Le montage des éléments de friction sur le frein décrit en relation avec les Figures 1 à 3 s'effectue de la manière suivante:

on introduit un axe 26 dans son orifice 28 du côté opposé au moteur de frein 18 puis on présente l'élément de friction 24 et on fait passer cet axe 26 à travers un orifice prévu dans l'élément de friction 24 celui-ci est alors maintenu par cet axe 26. On met en place l'élément de friction 20 dans le support fixe 12 et on procède au montage du ressort 32 en s'assurant que l'extrémité 54 repose bien sur la portion périphérique 38 de l'élément de friction 24 après avoir engagé l'extrémité libre 52 du prolongement 54 dans l'orifice 48, le ressort 32 repose dans ces conditions sur les deux éléments de friction 20 et 24, et l'extrémité 52 étant bien positionnée. En appuyant sur la portion centrale 34 que l'on fait fléchir, on introduit l'axe 26 par dessus le bras 40 du ressort 32 puis en faisant progresser davantage l'axe 26 on fait passer celui-ci au-travers d'un orifice formé dans l'élément de friction 20 puis en le faisant pénétrer dans le perçage 28 formé dans l'étrier 10. On verrouille alors cet axe 26 au moyen d'une goupille ou analogue. En maintenant la pression sur la portion centrale 34 on engage de la même façon le deuxième axe 26 dans ces orifices 28 au-travers des orifices formés dans les éléments de friction 20 et 24 en veillant bien à ce que ce deuxième axe 26 passe également au-dessus du deuxième bras 42 du ressort 32. On relâche alors l'effort exercé sur la portion centrale 34.

Dans le mode de réalisation représenté, on a défini sur le ressort 32 et plus précisément sur la portion centrale 34 trois plages appelées a, b, c, partant de l'extrémité 46 et dans la direction des bras 40 et 42 comme représenté sur la Figure 4. Ces trois plages correspondent la première a à la position de l'élément de friction 20 lorsque les deux éléments de friction 20 et 24 sont neufs ou en début d'usure, la deuxième plage b correspond à une usure moyenne des éléments de friction et la troisième c correspond à la position de l'élément de friction 20 par rapport au ressort 32 lorsque les éléments de friction sont proches de leur fin d'usure. En se reportant aux Figures 2 et 4 on voit que lorsque les éléments de friction sont neufs, le bras de levier sur le ressort 32 est maximum et donc l'effort radial appliqué sur l'élément de friction 20 et par réaction sur l'élément de friction 24 est minimal, inversement lorsque les éléments de friction sont en fin d'usure, le bras de levier étant minimal l'effort radial appliqué sur les éléments de friction est maximal. Pour éviter ces variations d'effort, lorsque l'élément de friction 20 est neuf, ou plus généralement dans la plage a, l'extrémité libre 52 du prolongement 44 coopère élastiquement avec la bordure extérieure 62 de l'orifice 48 engendrant une déformation élastique du prolongement 44 et augmentant ainsi l'effort sur l'élément de friction 20. Au fur et à mesure de l'usure des éléments de friction, c'est à dire lorsque l'élément de friction 20 se déplace dans le sens de la flèche B de la Figure 4 par rapport au ressort 32 en parcourant la plage a l'effort appliqué par la portion centrale 34 augmente mais l'effort engendré par la portion 44 diminue maintenant l'effort sur l'élément de friction 20 sensiblement constant. Lorsque l'élément de friction 20 atteint la plage b, l'extrémité libre 52 se détache de la bordure extérieure 62 et l'effort appliqué sur l'élément de friction 20 correspond à l'élasticité propre du ressort 32. Au fur et à mesure de l'usure des éléments de friction, l'élément de friction 20 parcourt la plage b tandis que l'extrémité libre 52 se déplace radialement à l'intérieur de l'ouverture 48 du fait du jeu radial existant entre cette extrémité 52 et les deux bordures 62 et 64 de l'ouverture 48. Lorsque l'usure des éléments de friction 20 et 24 est telle que l'élément de friction 20 pénètre dans la plage c l'extrémité libre 52 vient en contact de la bordure intérieur 64 de l'orifice 48 diminuant ainsi l'effort sur l'élément de friction 20 exercé par le ressort 32. Cette succession des trois plages permet de maintenir l'effort radial exercé sur les éléments de friction sensiblement constants.

Il est bien évident, que l'orifice 48 peut être défini de façon à n'être en présence que des plages a et b ou bien b et c ceci en fonction des variations admissibles sur l'effort radial appliqué aux éléments de friction.

Comme on le voit de la description qui précède, le frein objet de l'invention assure un montage correct du ressort anti-bruit 32 sans risque de montage inversé, et permet une limitation des variations des efforts radiaux appliqués par ce ressort sur les éléments de friction.

Les positions radiales des bordures extérieure 62 et intérieure 64, et bien entendu leur distance permettent de définir les plages a, b et c et en particulier leurs largeurs.

## Revendications

1. Frein à disque à étrier coulissant (10) comportant deux axes de guidage et de maintien (26) de deux éléments de friction (20, 24) susceptibles d'être actionnés par un moteur de frein (18) et comportant un ressort anti-bruit (32) constitué d'une lame métallique en forme générale d'une croix comportant deux bras d'appui (40, 42) formés de part et d'autre d'une portion centrale axiale (34), lesdits bras prenant appui radialement sur lesdits axes (26), ladite portion centrale coopérant en appui avec des portions périphériques extérieures (36, 38) des éléments de friction (20, 24) caractérisé en ce qu'une (46) des extrémités (46, 54) de ladite portion centrale (34) comporte un prolongement (44) ayant une forme générale en Z, l'extrémité libre (52) dudit prolongement (44) s'étendant généralement parallèlement à ladite portion centrale (34) et étant reçue une ouverture (48) formée en vis à vis dans ledit étrier (10), avec un jeu radial prédéterminé, et en ce que trois plages (a, b, c) de positions relatives dudit élément de friction (20) par rapport à ladite portion centrale (34) sont prédéterminées, une première plage (a) correspondant aux éléments de friction neufs ou au début de leur usure pour laquelle ledit prolongement (44) coopère radialement extérieurement avec une bordure extérieure (62) de l'orifice (48), une deuxième plage (b) correspondant à une usure moyenne des éléments de friction pour laquelle le prolongement (44) est libre radialement dans ledit orifice (48) et une troisième plage (c) correspondant à la fin d'usure des éléments de friction pour laquelle ledit prolongement (44) coopère radialement intérieurement avec une bordure intérieure (64) de l'orifice (48).

2. Frein à disque selon la revendication 1, caractérisé en ce que l'autre (54) desdites extrémités (46, 54) de la portion centrale (34) est placée en vis à vis d'une surface frontale (56) formée sur l'étrier (10) à proximité de cette autre extrémité (54).

3. Frein à disque selon la revendication 2, caractérisé en ce que lesdits bras (40, 42) sont formés à proximité de ladite autre extrémité (54).

4. Frein à disque selon la revendication 3 caractérisé en ce que lesdits bras (40, 42) sont sensiblement rigides ainsi que ladite autre extrémité (54), l'une (46) desdites extrémités étant sollicitée élastiquement en appui sur ladite portion périphérique externe (36) de l'élément de friction correspondant (20).

5. Frein à disque selon l'une des revendications précédentes caractérisé en ce que lesdits bras (40, 42) comportent des extrémités cintrées radialement immobilisant transversalement ledit ressort (32) par rapport auxdits axes (26).

**Claims**

1. Disc brake with a sliding calliper (10) incorporating two shafts for guiding and for holding (26) two friction components (20, 24) which are capable of being actuated by a brake actuator (18) and incorporating a spring for noise suppression (32) consisting of a metal leaf in the general shape of a cross incorporating two bearing arms (40, 42) formed on each side of a central axial portion (34), the said arms bearing radially against the said shafts (26), the said central portion cooperating in bearing with external peripheral portions (36, 38) of the friction components (20, 24) characterized in that one (46) of the ends (46, 54) of the said central portion (34) incorporates an extension (44) having the general form of a Z, the free end (52) of the said extension (44) extending generally parallel to the said central portion (34) and being received in an opening (48) formed opposite in the said calliper (10), with a predetermined radial play, and in that three zones (a, b, c) of relative positions of the said friction component (20) in relation to the said central port ion (34) are predetermined, a first zone (a) corresponding to the new friction components or to the start of their wear, for which the said extension (44) interacts radially on the outside with an external rim (62) of the hole (48), a second zone (b) corresponding to a medium wear of the friction components, for which the extension (44) is radially free in the said hole (48), and a third zone (c) corresponding to the end of wear of the friction components, for which the said extension (44) interacts radially on the inside with an internal rim (64) of the hole (48).

2. Disc brake according to claim 1, characterized in that the other (54) of the said ends (46, 54) of the central portion (34) is positioned facing a frontal surface (56) formed on the calliper (10) close to this other end (54).

3. Disc brake according to claim 2, characterized in that the said arms (40, 42), are formed close to the said other end (54).

4. Disc brake according to claim 3, characterized in that the said arms (40, 42) are essentially rigid together with the said other end (54), one (46) of the said ends being elastically pushed so as to bear against the said external peripheral portion (36) of the corresponding friction component (20).

5. Disc brake according to one of the preceding claims, characterized in that the said arms (40, 42) incorporate radially curved ends immobilising the said spring (32) transversely relative to the said shafts (26).

**Patentansprüche**

1. Scheibenbremse mit einem Schwimmsattel (10), der zwei Führungs- und Haltestifte (26) für zwei durch einen Bremsmotor (18) betätigbare Bremsbacken (20, 24) und ein Antiratterfeder (32) aufweist, die aus einem metallischen Federblatt in Form eines Kreuzes mit zwei Armen (40, 42) besteht, welche beidseitig zu einem axialen zentralen Abschnitt (34) gebildet sind, wobei die Arme radial an den Stiften (26) angreifen und der zentrale Abschnitt anlagemäßig mit äußeren Umfangsabschnitten (36, 38) der Bremsbacken (20, 24) zusammenwirkt, dadurch gekennzeichnet, daß ein Ende (46) der Enden (46, 54) des zentralen Abschnittes (34) eine ungefähr Z-förmige Verlängerung (44) aufweist, wobei das freie Ende (52) der Verlängerung (44) im wesentlichen parallel zu dem zentralen Abschnitt (34) verläuft und in eine gegenüberliegend im Schwimmsattel (10) gebildete Öffnung (48) mit vorgegebenem radialem Spiel greift, und daß drei Bereiche (a, b, c) zur Positionierung des besagten Bremsbackens (20) relativ zu dem zentralen Abschnitt (34) vorgegeben sind, wobei ein erster Bereich (a) den neuen Reibbacken bzw. ihrem Abnutzungsbeginn entspricht, bei welchem die Verlängerung (44) radial außen mit einem Außenrand (62) der Öffnung (48) zusammenwirkt, ein zweiter Bereich (b) einer mittleren Abnutzung der Bremsbacken entspricht, bei welchem die Verlängerung (44) radial frei in der Öffnung (48) ist, und ein dritter Bereich (c) dem Ende der Abnutzung der Bremsbacken entspricht, bei welchem die Verlängerung (44) radial innen mit einem Innenrand (64) der Öffnung (48) zusammenwirkt.

2. Scheibenbremse nach Anspruch 1, dadurch gekennzeichnet, daß das andere Ende (54) der Enden (46, 54) des zentralen Abschnitts (34) gegenüberliegend einer frontalen Fläche (56) angeordnet ist, die am Schwimmsattel (10) in der Nähe dieses anderen Endes (54) gebildet ist.

3. Scheibenbremse nach Anspruch 2, dadurch gekennzeichnet, daß die Arme (40, 42) in der Nähe des besagten anderen Endes (54) gebildet sind.

4. Scheibenbremse nach Anspruch 3, dadurch gekennzeichnet, daß die Arme (40, 42) im wesentlichen starr wie auch das besagte andere Ende (54) sind, wobei das eine Ende (46) gegen den äußeren Umfangsabschnitt (36) des entsprechenden Bremsbackens (20) elastisch angedrückt wird.

5. Scheibenbremse nach einem der vorhergehenden Ansprüche, dadurch gekennzeichnet, daß die Arme (40, 42) radial abgebogene Enden aufweisen, die die Feder (32) bezüglich den Stiften (26) in Querrichtung festlegen.

FIG_1

FIG. 2

FIG. 3

FIG. 4

FIG. 5

FIG. 6

FIG. 7